# EUROPEAN PATENT APPLICATION

(11) **EP 1 494 442 A2**
(43) Date of publication of application: **05.01.2005**
(21) Application number: 04013915.6
(22) Date of filing: 14.06.2004
(51) Int. Cl.: H04M 3/42

(54) **System to provide sounds and additional information related to the sounds**

(30) Priority: 02.07.2003 JP 2003190466
(71) Applicant: NTT DoCoMo, Inc., Tokyo 100-6150 (JP)
(72) Inventor: Urata, Yasuhiro, Chiyoda-ku Tokyo 100-6150 (JP); Kawahashi, Hiroshi, Chiyoda-ku Tokyo 100-6150 (JP); Kawano, Natsuko, Chiyoda-ku Tokyo 100-6150 (JP)
(74) Representative: GROSSE BOCKHORNI SCHUMACHER

(57) **Abstract**

An object is to implement such a configuration that, where a call recipient (35) sets a caller-side RBT, a caller (30) can acquire information about the RBT. For achieving this object, a sound information providing system (1a) comprises a sound source information replicating part (111) for replicating sound source information about the RBT under transmission to a cell phone (30) in a call origination to another cell phone (35), prior to arrival at the cell phone (30); a relevant information acquiring part (102) for acquiring relevant information about the sound source information on the basis of the replicated sound source information; and an acquisition result keeping part (103) for storing the acquired relevant information in connection with a telephone number of the cell phone in an acquisition result storage (152).

## Description

### BACKGROUND OF THE INVENTION

### Field of the Invention

The present invention relates to a sound information providing system.

### Related Background Art

When a communication terminal (including a fixed telephone, a mobile unit, a facsimile communication device, etc.; the same will apply to description hereinafter) capable of generating a sound based on sound source information transmitted through a communication network originates a call to another communication terminal, a receiver of the caller communication terminal outputs such a sound as a dial tone (DT), a ring back tone (RBT), or a busy tone (BT) according to a situation of the call originating operation. These sounds are outputted by converting an electric signal sent from switching equipment through a communication network, to a sound. Therefore, those sounds were predetermined ones. In contrast to it, there is a known technology of permitting one to set arbitrary sounds as the DT, RBT, and BT, for example, as described in Patent Document 1 below.

Patent Document 1: Japanese Patent Application Laid-Open No. JP-A-2002-368882

### SUMMARY OF THE INVENTION

The conventional technology is one in which an electric signal is converted to a sound set by a caller in a communication terminal of the caller. It was thus infeasible, for example, for a call recipient to set his or her favorite music and send the music as an RBT to the caller. Furthermore, where the call recipient set and sent his or her favorite music, the caller was unable to acquire any information about the music even if the caller liked the music.

An object of the present invention is therefore to provide a sound information providing system enabling a call recipient to set a caller-side RBT and, in that case, enabling the caller to acquire information about the RBT.

A sound information providing system according to the present invention is a sound information providing system comprising: sound source information replicating means for replicating sound source information under transmission to a communication terminal capable of generating a predetermined sound on the basis of the sound source information transmitted through a communication network in a call origination to another communication terminal, prior to arrival at the communication terminal; relevant information acquiring means for acquiring relevant information about the sound source information on the basis of the replicated sound source information; and acquisition result keeping means for storing the acquired relevant information in connection with terminal identification information to identify the communication terminal, in acquisition result storing means.

Since the sound information providing system of the present invention is configured to replicate the sound source information under transmission to the communication terminal, it can acquire the sound source information to be transmitted to the communication terminal. Since the system is configured to acquire the relevant information on the basis of the acquired sound source information and store it in connection with the terminal identification information in the acquisition result storing means, it can, for example, provide the relevant information in response to a request.

The sound information providing system of the present invention is also preferably configured to comprise sound source identifying means for identifying sound source identification information inherent to the replicated sound source information, based on the sound source information replicated by the sound source information replicating means, and configured so that the relevant information acquiring means acquires the relevant information, based on the identified sound source identification information. Since the system is configured to identify the sound source identification information inherent to the sound source information and acquire the relevant information based thereon, it can, for example, acquire relevant information items scattered at various locations, using the sound source identification information as a key.

The sound information providing system of the present invention is also preferably configured to comprise acquisition result transmitting means for accepting a relevant information transmission request containing the terminal identification information and for transmitting relevant information stored in connection with the terminal identification information, on the basis of the accepted relevant information transmission request. Since the system is configured to, in response to a relevant information transmission request containing terminal identification information, transmit relevant information stored in connection with the terminal identification information, it can provide the relevant information in response to the request.

The sound information providing system of the present invention is also preferably configured so that the sound source information replicating means determines whether the sound source information under transmission is one directed to a communication terminal preliminarily registered, and so that, when the sound source information under transmission is one directed to a communication terminal preliminarily registered, the sound source information replicating means replicates the sound source information under transmission. Since the system is configured to replicate the sound source information when the sound source information is one directed to a communication terminal preliminarily registered, it can avoid replication of unnecessary sound source information.

### BRIEF DESCRIPTION OF THE DRAWINGS

The present invention may be more readily described with reference to the accompanying drawings, in which:
Fig. 1 is an illustration for explaining a sound information providing system as an embodiment of the present invention;
Fig. 2 is an illustration showing an example of information stored in an RBT information storage shown in Fig. 1;
Fig. 3 is an illustration showing an example of information stored in a sound source information storage shown in Fig. 1;
Fig. 4 is an illustration showing an example of information stored in a relevant information storage shown in Fig. 1;
Fig. 5A is an illustration showing an example of information stored in an acquisition result storage shown in Fig. 1; and
Fig. 5B is an illustration showing an example of information stored in the acquisition result storage shown in Fig. 1.

### DESCRIPTION OF THE PREFERRED EMBODIMENTS

The knowledge of the present invention can be readily understood in view of the following detailed description with reference to the accompanying drawings presented for illustrative purposes only. Now we will describe embodiments of the present invention with reference to the accompanying drawings. The same portions will be denoted by the same reference symbols as much as possible, without redundant description.

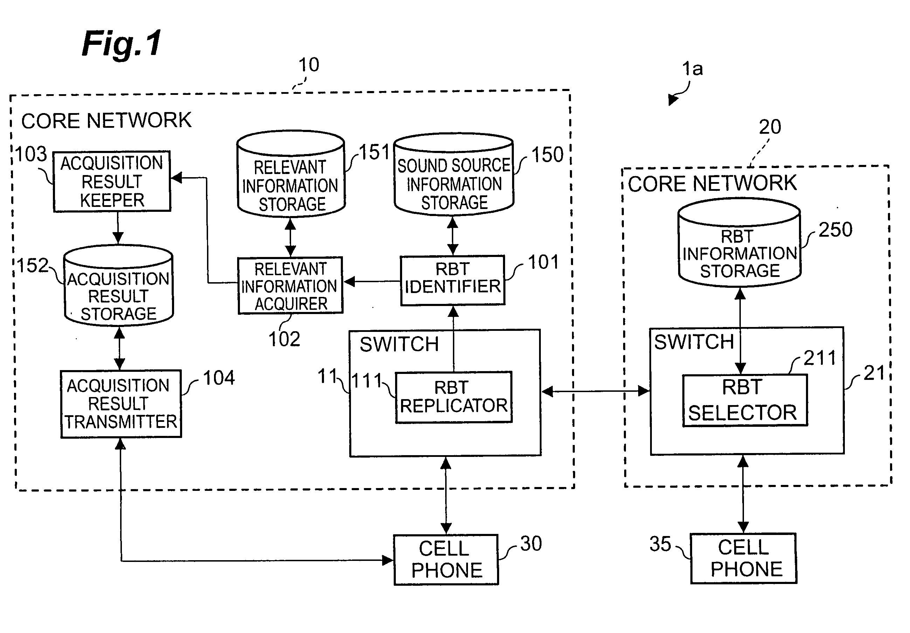

A sound information providing system as an embodiment of the present invention will be described with reference to Fig. 1. Fig. 1 is an illustration for explaining the sound information providing system 1a. The sound information providing system 1a of the present embodiment includes core network 10 and core network 20. The core network 10 and core network 20 are core networks operated by their respective mobile communications carriers different from each other, which are configured so as to be able to communicate with each other. The core network 10 and core network 20 shown in Fig. 1 are illustrated with only extracts of portions necessary for the description of the present embodiment, and also include unrepresented components such as base stations, base station controllers, local registers, home registers, gateway switching centers, and gateway devices. Cell phone 30 in this embodiment is a cell phone used by a caller, and is connected to the core network 10. Cell phone 35 in this embodiment is a cell phone used by a call recipient and is connected to the core network 20. The cell phone 30 and cell phone 35 are communication terminals capable of generating a predetermined sound (ring back tone) on the basis of sound source information transmitted through a communication network (core network 10, core network 20, etc.) in a call origination to a cell phone or the like as another communication terminal.

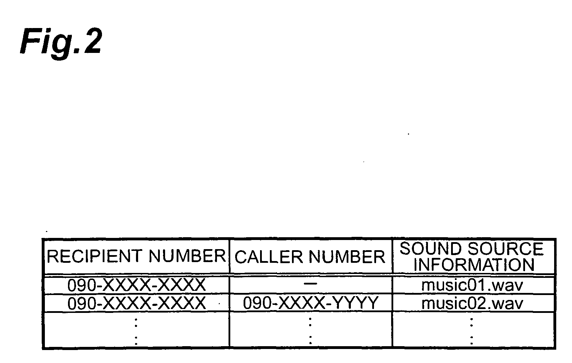

Subsequently, the core network 20 will be described. As shown in Fig. 1, the core network 20 contains switch 21 and RBT information storage 250. The switch 21 incorporates RBT selector 211 in addition to the functional part as an ordinary switch. The RBT selector 211 is a part configured so that when there is an incoming call to a cell phone under control of the switch 21, it determines whether there is a ring back tone registered, with reference to information stored in RBT information storage 250. When there is a ring back tone registered, the RBT selector 211 outputs sound source information corresponding to the ring back tone registered. An example of the information stored in the RBT information storage 250 is presented in Fig. 2. According to the example shown in Fig. 2, the RBT information storage 250 stores "caller number," "recipient number," and "sound source information" in connection with each other. When conditions of "recipient number" and "caller number" agree with each other, the RBT selector 211 outputs corresponding sound source information as a ring back tone.

Returning to Fig. 1, the core network 10 will be described. The core network 10 contains switch 11 and further contains as functional components, RBT replicator 111 (sound source information replicating means) included in the switch 11, RBT identifier 101 (sound source identifying means), relevant information acquirer 102 (relevant information acquiring means), acquisition result keeper 103 (acquisition result keeping means), acquisition result transmitter 104 (acquisition result transmitting means), sound source information storage 150, relevant information storage 151, and acquisition result storage 152 (acquisition result storing means). These components are physically implemented each in a computer system (or a collection of computer systems) equipped with a CPU (central processing unit), a memory, input devices such as a mouse, a keyboard, etc., display equipment such as a display unit, a storage device such as a hard disk, and so on. Subsequently, each of the components will be described.

The RBT replicator 111 is a part that replicates sound source information under transmission through the communication network (core network 20 and others) in a call origination from cell phone 30 to cell phone 35, prior to arrival at cell phone 30. The RBT replicator 111 outputs this sound source information in connection with information to identify the terminal like a telephone number of cell phone 30 (terminal identification information), to RBT identifier 101. The RBT replicator 111 may replicate the whole of the sound source information under transmission or may replicate part of the sound source information. An example of the replication of part of the sound source information by RBT replicator 111 is a case where there is a desired information storage preliminarily storing telephone numbers of cell phones requesting acquisition of information about the sound source information and where the RBT replicator 111 replicates sound source information under transmission to a corresponding telephone number with reference to the telephone numbers stored. By adopting this configuration wherein the RBT replicator 111 replicates only the sound source information under transmission to a cell phone preliminarily requesting acquisition of information about the sound source information, the replicator does not have to replicate sound source information under transmission to cell phones not requesting the acquisition, which permits efficient utilization of a storage area of acquisition result storage 152 described below.

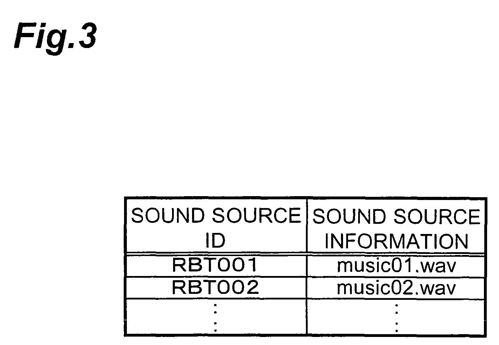

The RBT identifier 101 identifies, based on sound source information replicated by the RBT replicator 111, sound source identification information inherent to the replicated sound source information. More specifically, the RBT identifier 101 searches for matching between sound source information outputted by RBT replicator 111 and sound source information stored in sound source information storage 150 and acquires as sound source identification information a sound source ID stored in connection with the sound source information in the sound source information storage 150. An example of the information stored in the sound source information storage 150 is presented in Fig. 3. According to the example shown in Fig. 3, the sound source information storage 150 stores sound source IDs and sound source information in connection with each other. A sound source ID is information for identifying each sound source information, and information inherent to each sound source information. The sound source information is sound information enabling cell phone 30 or the like to generate a predetermined sound (ring back tone) based thereon. The RBT identifier 101 outputs a sound source ID as the identified sound source identification information in connection with the information to identify the terminal like the telephone number of cell phone 30 (terminal identification information), to the relevant information acquirer.

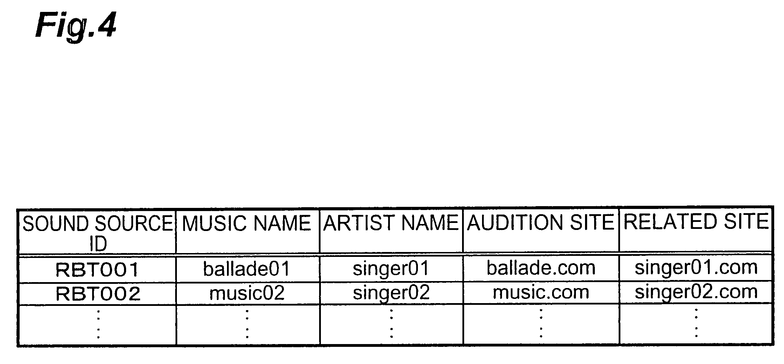

The relevant information acquirer 102 is a part that acquires relevant information about sound source information, based on a sound source ID identified by RBT identifier 101 on the basis of the sound source information replicated by RBT replicator 111. More specifically, the relevant information acquirer 102 searches the relevant information stored in the relevant information storage 151 on the basis of the sound source ID to acquire the relevant information corresponding to the sound source ID, and outputs the acquired relevant information in connection with the sound source ID and the information to identify the terminal like the telephone number of cell phone 30 (terminal identification information), to the acquisition result keeper 103. An example of the information stored in the relevant information storage 151 is presented in Fig. 4. According to the example shown in Fig. 4, the relevant information storage 151 stores "sound source ID," "music name," "artist name," "audition site," and "related site" in connection with each other. "Sound source ID" is information for identifying each sound source information. "Music name" indicates a music name of sound source information corresponding to a "sound source ID." "Artist name" indicates a name of an artist, for example, playing a music corresponding thereto. "Audition site" indicates link information (URL) to a site where the user can listen to a music based on corresponding sound source information. "Related site" indicates link information (URL) to a site posting information corresponding to an associated music, artist, or the like.

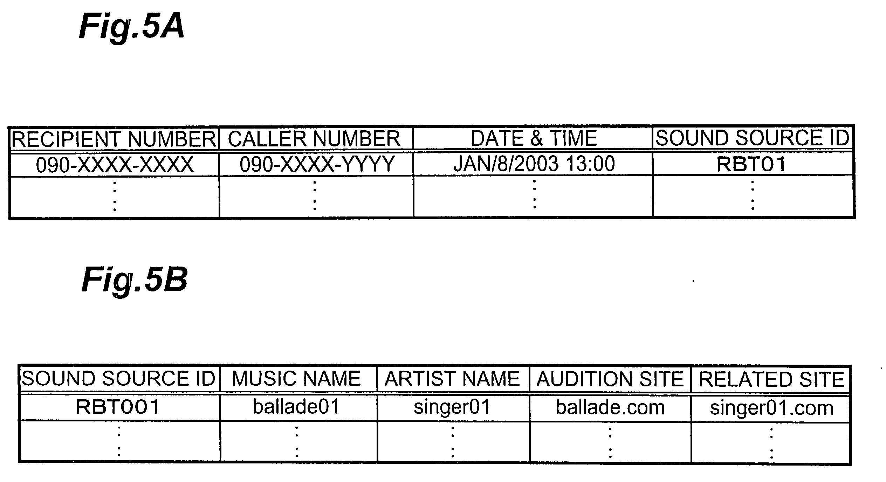

The acquisition result keeper 103 is a part that stores the relevant information acquired by relevant information acquirer 102, in connection with the information to identify the terminal like the telephone number of cell phone 30 (terminal identification information), in the acquisition result storage 152 (acquisition result storing means). Examples of the information stored in the acquisition result storage 152 by the acquisition result keeper 103 are presented in Fig. 5A and in Fig. 5B. According to the example shown in Fig. 5A, the acquisition result storage 152 stores "caller number," "recipient number," "date", and "sound source ID" in connection with each other. Therefore, for example, when a "caller number" is identified, it is feasible to identify a "recipient number," "date," and "sound source ID" and thus to provide those information items. According to the example shown in Fig. 5B, the acquisition result storage 152 stores "sound source ID," "music name," "artist name," "audition site," and "related site" in connection with each other. Therefore, for example, when a "sound source ID" is identified, it is feasible to provide the information related thereto.

The acquisition result transmitter 104 is a part that accepts a relevant information transmission request containing information to identify a terminal like the telephone number of cell phone 30 (terminal identification information), and that transmits the relevant information in connection with the information to identify the terminal, based on the accepted relevant information transmission request. More specifically, for example, in a case where the telephone number of cell phone 30 is "090-XXXX-YYYY," when a relevant information transmission request containing the telephone number is transmitted from cell phone 30, the acquisition result transmitter 104 receives the relevant information transmission request. The acquisition result transmitter 104 selects information with "caller number" being "090-XXXX-YYYY," based on the information stored in the acquisition result storage 152 (as exemplified in Fig. 5A). The acquisition result transmitter 104 selects the relevant information corresponding to the selected "sound source ID" (as exemplified in Fig. 5B). The acquisition result transmitter 104 transmits these selected information items to cell phone 30. The cell phone 30 displays these information items, i.e., the information items of "recipient number," "date," "music name," "artist name," "audition site," and "related site" to make them available.

The present embodiment was the example in which the cell phone 30 connected to the core network 10 originated a call to the cell phone 35 connected to the core network 20, but it is also possible to apply the invention to a case where a call is made between cell phones connected to an identical core network.

In the present embodiment the sound source information and relevant information items are stored in the sound source information storage 150 and in the relevant information storage 151 provided in the core network 10, but they may also be stored in storage means provided outside the core network 10.

In the present embodiment the acquisition result transmitter 104 transmits the relevant information to cell phone 30 in response to a request from the cell phone 30, but it is also possible to adopt, for example, a configuration in which the relevant information about cell phone 30 is transmitted in response to a request from an information communication device such as a personal computer. The user of cell phone 30 can acquire the information about the ring back tone heard through the cell phone, using the personal computer.

In the present embodiment the cell phone 30 was exemplified as a communication terminal, but the communication terminals are not limited to this example. The present invention can also be applied to such communication terminals as fixed telephones and facsimile communication devices.

In the present embodiment the acquisition result storage 152 stores both the information exemplified in Fig. 5A and the information exemplified in Fig. 5B, but another possible configuration is, for example, such that the acquisition result storage 152 does not store the information exemplified in Fig. 5B and the acquisition result transmitter 104 acquires the relevant information from the information stored in the relevant information storage 151 in response to a request.

Since in the present embodiment the system is configured to replicate the sound source information under transmission to the cell phone 30, it can acquire the sound source information to be transmitted to the cell phone 30. Since the system is configured to acquire the relevant information on the basis of the acquired sound source information and store it in connection with the telephone number of cell phone 30 in the acquisition result storage 152, it can provide the relevant information in response to a request. Since the RBT identifier 101 identifies a sound source ID on the basis of the replicated sound source information, the system can acquire the relevant information even to sound source information transmitted from another communication carrier and provide the relevant information.

## Claims

1. A sound information providing system comprising:
sound source information replicating means for replicating sound source information under transmission to a communication terminal capable of generating a predetermined sound on the basis of the sound source information transmitted through a communication network in a call origination to another communication terminal, prior to arrival at the communication terminal;
relevant information acquiring means for acquiring relevant information about the sound source information on the basis of the replicated sound source information; and
acquisition result keeping means for storing the acquired relevant information in connection with terminal identification information to identify the communication terminal, in acquisition result storing means.

2. The sound information providing system according to Claim 1, comprising sound source identifying means for identifying sound source identification information inherent to the replicated sound source information, based on the sound source information replicated by the sound source information replicating means,
wherein the relevant information acquiring means acquires the relevant information, based on the identified sound source identification information.

3. The sound information providing system according to Claim 1, comprising acquisition result transmitting means for accepting a relevant information transmission request containing the terminal identification information and for transmitting relevant information stored in connection with the terminal identification information, on the basis of the accepted relevant information transmission request.

4. The sound information providing system according to Claim 1, wherein the sound source information replicating means determines whether the sound source information under transmission is one directed to a communication terminal preliminarily registered, and wherein, when the sound source information under transmission is one directed to a communication terminal preliminarily registered, the sound source information replicating means replicates the sound source information under transmission.
